# EUROPÄISCHE PATENTSCHRIFT

(11) **EP 0 857 594 B1**
(45) Veröffentlichungstag und Bekanntmachung des Hinweises auf die Patenterteilung: **27.08.2003**
(21) Anmeldenummer: 98101967.2
(22) Anmeldetag: 05.02.1998
(51) Int. Cl.: B60H 1/00

(54) **Bedientafel für eine Kraftfahrzeug-Heizungs- oder Klimaanlage**
Operating unit for a heat or air conditioning device of a vehicle
Tableau de commande du chauffage ou du conditionnement d'air pour véhicule

(30) Priorität: 06.02.1997 DE 19704412
(43) Veröffentlichungstag der Anmeldung: 12.08.1998
(73) Patentinhaber: Hella KG Hueck & Co., 59552 Lippstadt (DE)
(72) Erfinder: Adamczak, Jürgen, 59555 Lippstadt (DE); Laukemper, Fr.-Josef, 33397 Rietberg (DE); Diller, Friedhelm, 33378 Rheda-Wiedenbrück (DE); Klein, H.-Joachim, 59556 Lippstadt (DE)

(56) Entgegenhaltungen:
- DE-A- 3 001 515
- DE-U- 29 505 606

## Beschreibung

Die Erfindung betrifft eine Bedientafel für eine Kraftfahrzeug-Heizungs- oder Klimaanlage nach dem Oberbegriff des Anspruchs 1.

Eine derartige Bedientafel ist aus der DE 19514976A1 vorbekannt. Bei der dortigen Bedientafel sind die Bedienungshandhabe für die Solltemperatur und die Bedienungshandhabe für den Luftdurchsatz zu einer gemeinsamen Bedienungshandhabe zusammengefaßt. Diese vorbekannte Zusammenfassung von Bedienungshandhaben ist jedoch nicht sinnfällig, da jede eingestellte Solltemperatur einem vorgegebenen Luftdurchsatz entspricht. Diese Maßnahme führt jedoch insbesondere beim Kaltstart eines Kraftfahrzeuges im Winter zu falschen Einstellungen, da der Bediener des Kraftfahrzeuges zwar eine höchste Solltemperatur einstellen kann, die gemäß der vorbekannten Lösung einem höchsten Luftdurchsatz entspricht. Da jedoch der Kraftfahrzeugmotor noch kalt ist, ist die Kraftfahrzeugheizung noch nicht in der Lage, erwärmte Luft zu liefern, so daß der Bediener des Kraftfahrzeuges, abhängig von der Stellung der Bedienungshandhabe für die Luftverteilung, die separat ausgeführt ist, mit kalter Luft und hohem Luftdurchsatz angeströmt wird. Dies ist unkomfortabel und entspricht nicht dem vom Bediener des Kraftfahrzeuges gewünschten Funktionsablauf der Heizungsund/oder Klimaanlage.

Eine weitere Bedientafel gemäß dem Oberbegriff des Anspruchs 1 ist aus der Druckschrift DE 30 01 515 A1 bekannt. Diese Druckschrift offenbart eine Bedientafel mit einer einzigen Bedienungshandhabe, mit welcher gleichermaßen die Solltemperatur, der Luftdurchsatz und die Luftverteilung eingestellt werden kann. Die Bedienungshandhabe kann dabei Stellungen in drei verschiedenen Bereichen nehmen. In einem ersten Bereich ist die Luftverteilung so eingestellt, dass ein Defrosten der Windschutzscheibe möglich ist. In diesem Bereich ist die Solltemperatur und der Luftdurchsatz auf maximale Leistung eingestellt. In einem an diesen ersten Bereich anschließenden Bereich ist zwischen diesem zweiten Bereich begrenzenden Stellungen eine Veränderung der Solltemperatur möglich. Mit dieser Veränderung der Solltemperatur ist immer eine Veränderung des Luftdurchsatzes verbunden. Eine Veränderung der Luftverteilung erfolgt jedoch nicht. Die Luftverteilung ist immer so eingestellt, dass die Luft aus seitlichen Düsen austritt. An diesen zweiten Bereich schließt sich unmittelbar der dritte Bereich an, in welchen die Bedienungshandhabe gebracht werden kann. In diesem dritten Bereich ist die Solltemperatur immer minimal, die Luftverteilung ist immer so eingestellt, dass die seitlichen Düsen mit Luft beaufschlagt werden, und lediglich der Luftdurchsatz lässt sich in zwei Stufen steuern.

Auch bei der in Druckschrift DE 30 01 515 A1 offenbarten Bedientafel ist somit die Bedienung der Solltemperatur und des Luftdurchsatzes zusammengefasst, so dass eine unabhängige Steuerung des Luftdurchsatzes und der Lufttemperatur nicht möglich ist. Auch bei dieser in einer Bedienungshandhabe zusammengefassten Steuerung von Solltemperatur und Luftdurchsatz treten die Nachteile auf, welche bereits für die Bedientafel gemäß der Druckschrift DE 195 14 976 A1 genannt wurden.

Die Erfindung hat die Aufgabe, eine Bedientafel für eine Kraftfahrzeug-Heizungs- oder Klimaanlage zu schaffen, bei der eine sinnfällige Einstellung der vom Bediener beeinflussbaren Einflußgrößen durch den ungeübten oder technisch unbegabten Bediener des Kraftfahrzeuges gewährleistet ist.

Diese Aufgabe wird erfindungsgemäß durch die Kennzeichenmerkmale des Anspruches 1 gelöst.

Bei der erfindungsgemäßen Ausbildung der Bedientafel sind die Bedienungshandhabe für die Solltemperatur und die Bedienungshandhabe für die Luftverteilung zu einer gemeinsamen Bedienungshandhabe zusammengefaßt. Das heißt, wenn der Bediener des Kraftfahrzeuges, abhängig von seinem persönlichen Temperaturempfinden, eine Solltemperatur einstellt, so gibt er damit auch eine bestimmte Verteilung der klimatisierten Luft im Kraftfahrzeuginnenraum vor.

Diese Kopplung der vorgegebenen Luftverteilung an die eingestellte Solltemperatur ist dabei anders als beim Vorbekannten durchaus sinnfällig, denn physiologische Untersuchungen haben ergeben, daß sich im Kraftfahrzeuginnenraum befindende Personen am ehesten wohlfühlen, wenn die Temperatur im Kopfbereich niedriger ist als im Fußbereich.

Demzufolge kann, abhängig von der eingestellten Solltemperatur, davon ausgegangen werden, daß bei einer gewünschten Erwärmung des Kraftfahrzeuginnenraums beispielsweise Warmluft in den Fußraum des Kraftfahrzeuginnenraums eingeblasen werden soll, wogegen bei einer gewünschten Abkühlung des Kraftfahrzeuginnenraums eher Kaltluft in den Kopfraum des Kraftfahrzeuginnenraums eingeblasen werden soll.

Das heißt, mit der Erfindung wird eine nicht wie beim Vorbekannten willkürliche, sondern eine sinnfällige Kopplung der vom Bediener des Kraftfahrzeuges beeinflußbaren Parameter der Klimatisierung der in den Innenraum einströmenden Luft gewährleistet, wobei durch eine Reduzierung der Zahl der Bedienungshandhaben die Bedienung der Kraftfahrzeug-Heizungs- oder Klimaanlage über die Bedientafel vereinfacht wird. Zudem wird durch die beanspruchte Kopplung der Bedienungshandhaben eine drastische Fehlbedienung der Kraftfahrzeug-Heizungs- oder Klimaanlage vermieden. Durch die Reduzierung der Gesamtzahl der Bedienungshandhaben kann die erfindungsgemäße Bedientafel gegenüber dem Vorbekannten kleiner gestaltet werden, und die Herstellkosten zum Aufbau der erfindungsgemäßen Bedientafel sind gegenüber den vorbekannten Lösungen reduziert.

Vorteilhafte Ausgestaltungen und Weiterbildungen der erfindungsgemäßen Bedientafel gehen aus den Unteransprüchen hervor.

Zur Gewährleistung einer sinnfälligen Kopplung von Luftverteilung und Solltemperatur ist es vorteilhaft, wenn bei eingestellter mittlerer Solltemperatur die Fußraumausströmer geöffnet sind, weil in diesem Fall davon auszugehen ist, daß der Bediener des Kraftfahrzeuges mit dem vorgefundenen Klima im Innenraum des Kraftfahrzeuges zufrieden ist und insofern insbesondere eine direkte Anströmung des Bedieners mit der klimatisierten Luft nicht erforderlich ist.

Bei eingestellter höchster Solltemperatur kann besonders vorteilhaft der Defrostausströmer geöffnet sein, weil in diesem Fall von einem Kaltstart des Kraftfahrzeuges im Winter ausgegangen werden kann, so daß auch zur Gewährleistung der Verkehrssicherheit ein Beschlagen oder Vereisen der Kraftfahrzeugscheiben verhindert werden muß. Andererseits kann es besonders vorteilhaft sein, wenn auch bei eingestellter niedrigster Solltemperatur die Defrostausströmer geöffnet werden, weil dann von einem Start des Kraftfahrzeuges bei hoher Außentemperatur ausgegangen werden kann und im Sinne der gewünschten Luftschichtung die einströmende Kaltluft überwiegend in den Kopfbereich des Kraftfahrzeuginnenraums gelangen sollte.

Andererseits kann auch bei eingestellter niedrigster oder niedriger Solltemperatur der Schalttafelausströmer geöffnet sein, weil dann ebenfalls von einem zu warmen Kraftfahrzeuginnenraum ausgegangen werden kann und in diesem Fall der Bediener des Kraftfahrzeuges eine Abkühlung auch durch direkt auf ihn einströmende klimatisierte Luft erwartet.

Bei eingestellter hoher, jedoch nicht höchster Solltemperatur können besonders vorteilhaft die Fußraumausströmer und die Defrostausströmer geöffnet werden, so daß die erwärmte Luft sowohl zur Freihaltung der Kraftfahrzeugscheiben von Beschlag als auch zur Erwärmung des Fußraums des Kraftfahrzeuges dient. Ebenso können bei eingestellter niedriger, jedoch nicht niedrigster Solltemperatur die Fußraumausströmer und die Schalttafelausströmer geöffnet sein, um in diesem Fall eine möglichst gleichmäßige Abkühlung des Kraftfahrzeuginnenraums über durch möglichst viele Ausströmöffnungen eintretende temperierte Luft zu gewährleisten.

Insbesondere dann, wenn die Bedientafel einer Kraftfahrzeug-Klimaanlage zugeordnet ist, kann eine Bedienungshandhabe für die Schaltung eines Kühlaggregates vorgesehen sein, die mit der gemeinsamen Bedienungshandhabe für die Solltemperatur und die Luftverteilung zusammengefaßt ist, wobei die gemeinsame Bedienungshandhabe derart ausgeführt sein sollte, daß eine Schaltung des Kühlaggregates unabhängig von der Einstellung der Solltemperatur, und damit der Luftverteilung, möglich ist.

Die gemeinsame Bedienungshandhabe kann eine Drehhandhabe sein. Im Falle einer Klimaanlagen-Bedientafel kann die gemeinsame Bedienungshandhabe auch eine Drehschiebehandhabe sein, derart daß durch die Drehstellung die Solltemperatur, und damit die Luftverteilung, und durch die Schiebestellung der Schaltzustand des Kühlaggregates vorgegeben wird.

Immer häufiger findet sich in Bedientafeln für Kraftfahrzeug-Heizungs- oder Klimaanlagen eine Bedienungshandhabe für die Frischluft-/Umluftschaltung, die es dem Bediener des Kraftfahrzeuges ermöglicht zu entscheiden, ob die temperierte Luft von außerhalb des Kraftfahrzeuges kommt oder der abgeführten Innenraumluft entnommen wurde. In diesen Fällen ist es besonders vorteilhaft, wenn diese Bedienungshandhabe mit der Bedienungshandhabe für den Luftdurchsatz zu einer zweiten gemeinsamen Bedienungshandhabe zusammengefaßt ist, weil auch durch diese Maßnahme die Zahl der Bedienungshandhaben gering gehalten und damit die Bedienung der Kraftfahrzeug-Heizungs- oder Klimaanlage für den auch ungeübten Bediener vereinfacht ist. In diesem Fall kann die Frischluft-/Umluftumschaltung in einer Mittelstellung der zweiten gemeinsamen Bedienungshandhabe erfolgen, wobei, ausgehend von dieser Mittelstellung, der Luftdurchsatz stufenweise oder kontinuierlich erhöht wird. Diese zweite gemeinsame Bedienungshandhabe kann ebenfalls besonders vorteilhaft eine Drehhandhabe sein.

Ausführungsbeispiele der erfindungsgemäßen Bedientafel sind in den Figuren dargestellt und werden im folgenden anhand der Figuren näher erläutert.

Es zeigen
- Figur 1: eine Bedientafel in einer ersten Ausführungsform und
- Figur 2: eine Bedientafel in einer zweiten Ausführungsform.

In den Figuren weist die Bedientafel (1) eine erste Bedienungshandhabe (2) zur Einstellung der Solltemperatur, der Luftverteilung und zur Schaltung eines Klima-Aggregates der mit der Bedientafel (1) gesteuerten Kraftfahrzeug-Klimaanlage auf. Diese Bedienungshandhabe (2) ist als Drehschiebehandhabe ausgebildet, wobei die Drehstellung der Bedienungshandhabe (2) die Solltemperatur und die damit gekoppelte Luftverteilung der klimatisierten Luft bestimmt. Die Schiebestellung der Bedienungshandhabe (2) in Richtung senkrecht zur Zeichnungsebene bestimmt den Schaltzustand des Klima-Aggregates.

Weiterhin weist die Bedientafel (1) eine zweite Bedienungshandhabe (3) zur Vorgabe des Luftdurchsatzes und zur Frischluft-/Umluftschaltung auf. Auch diese Bedienungshandhabe (3) ist als Drehhandhabe ausgebildet, wobei, ausgehend von der in den Figuren dargestellten Mittelstellung der zweiten Bedienungshandhabe (3), in den Figuren nach links die Versorgung des Kraftfahrzeuginnenraumes mit Frischluft und in den Figuren nach rechts die Versorgung des Kraftfahrzeuginnenraumes mit Umluft geschaltet wird.

Die Bedientafel (1) wird mittels Befestigungspunkten (4) in der Schalttafel eines in den Figuren nicht dargestellten Kraftfahrzeuges befestigt. Neben den genannten Bedienungshandhaben weist die Bedientafel (1) zusätzlich ein Anzeigefeld (5) auf, das den Schaltzustand des Klima-Aggregates der Klimaanlage anzeigt. Neben diesem Anzeigefeld ist eine blaue Farbmarkierung (6) für die Einstellung kalter Solltemperaturen und eine rote Farbmarkierung (7) für die Einstellung warmer Solltemperaturen der Bedienungshandhabe (2) zugeordnet. Neben den genannten Farbmarkierungen (6, 7) sind Markierungen (8) für die Luftverteilung zwischen den Fußraumausströmern ( 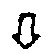 ), den Schalttafelausströmern ( 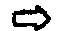 ) und den Defrostdüsen ( 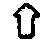 ) angeordnet. Zusätzlich zu diesen Pfeilmarkierungen (8) existieren Defrostmarkierungen (9), die ebenfalls der Bedienungshandhabe (2) bzw. den Farbmarkierungen (6, 7) zugeordnet sind.

Der Bedienungshandhabe (3) sind Zahlenmarkierungen (10) jeweils mit den Zahlen (1 - 5) zur Anzeige der Luftdurchsatzmenge bzw. der Lüfterdrehzahl zugeordnet. Ebenfalls der zweiten Bedienungshandhabe (3) ist eine Markierung (11) für Frischluftzufuhr und eine Markierung (12) für Umluftzufuhr zugeordnet. Die Markierungen (10) für Lüfterdrehzahl sind in der Figur 2 nicht mit Zahlen, sondern mit unterschiedlich großen Punkten gekennzeichnet. Zusätzlich ist in der Figur 2 die Ausbildung der Farbmarkierungen (6, 7) so gestaltet, daß beiden Farbmarkierungen (6, 7) an ihrem Ende eine Defrostmarkierung (9) zugeordnet ist.

Wenn nun der Bediener des Kraftfahrzeuges mittels der Bedienungshandhabe (2) eine gewünschte Solltemperatur, beispielsweise eine gewünschte hohe Solltemperatur, vorgibt, so wählt er damit zugleich die zugeordnete Luftverteilung.

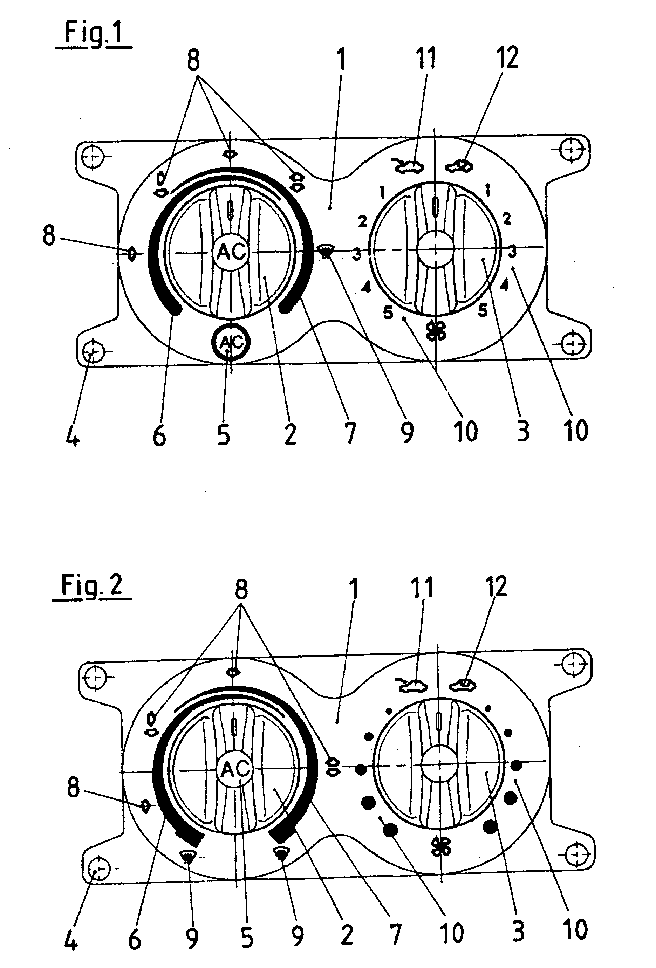

Dies ist in den vorliegenden Ausführungsbeispielen eine Luftverteilung, die durch einen Pfeil nach oben und durch einen Pfeil nach unten gekennzeichnet ist, so daß die Fußraumausströmer und die Defrostausströmer geöffnet sind und sich die dem Innenraum zugeführte Innenraumluft auf diese Ausströmer verteilt. Wählt der Bediener des Kraftfahrzeuges eine andere gewünschte Temperatur, wie beispielsweise eine niedrige Solltemperatur, so ist dieser niedrigen Solltemperatur ebenfalls eine vorgegebene Luftverteilung zugeordnet. Dies ist in dem Fall der Figuren 1 und 2 eine Luftverteilung, gekennzeichnet durch den waagerechten Pfeil, der die Öffnung der Schalttafelausströmer kennzeichnet.

Sonderfälle können die höchste und die niedrigste voreingestellte Solltemperatur darstellen, weil diesen voreingestellten Solltemperaturen das Defrostsymbol (9) zugeordnet ist, gemäß dem nur die Defrostausströmer geöffnet werden und insofern, abhängig von der gewählten Temperatureinstellung, entweder die besonders kalte oder die besonders warme Luft auf die Kraftfahrzeugscheiben geleitet wird, um ein Beschlagen der Scheiben beispielsweise zu verhindern.

Stellt nun der Bediener des Kraftfahrzeuges die zweite Bedienungshandhabe (3) in eine Stellung außerhalb der in den Figuren dargestellten Neutralstellungen, so wählt er damit einerseits den Schaltzustand der Frischluft-/Umluftschaltung vor. Wenn er beispielsweise die Drehhandhabe (3) im Uhrzeigersinn bewegt, so schaltet er die Frischluft-/Umluftschaltung auf Umluft und stellt abhängig davon, wie weit er die Drehhandhabe (3) im Uhrzeigersinn betätigt, eine vorgegebene Luftdurchsatzmenge, entsprechend einer vorgegebenen Lüfterdrehzahl, ein.

Das heißt, in beiden Fällen der Bedienung der Bedienungshandhaben (2, 3) wird mit der Vorgabe eines einstellbaren Parameters, im Fall der Bedienungshandhabe (2) der Solltemperatur, im Fall der Bedienungshandhabe (3) des Schaltzustands der Frischluft-/Umluftschaltung zugleich ein weiterer Parameter mit vorgegeben, nämlich im Fall der Bedienungshandhabe (2) die Luftverteilung und im Fall der Bedienungshandhabe (3) die gewünschte Lüfterdrehzahl. Dies trägt wesentlich zur Vereinfachung der Bedienungsabläufe bezüglich der Kraftfahrzeug-Heizungs- oder Klimaanlage über die Bedientafel (2) bei und ermöglicht es auch dem ungeübten oder technisch nicht versierten Bediener der Kraftfahrzeug-Heizungs- oder Klimaanlage, eine sinnfällige und sinnvolle Bedienung der Heizungs- oder Klimaanlage durchzuführen.

### Bezugszeichenliste

### Bedientafel für eine Kraftfahrzeug-Heizungs- oder Klimaanlage

- 1: Bedientafel
- 2: erste Bedienungs- (Drehschiebe-) Handhabe für Solltemperatur, Luftverteilung und ggf. (Ein-)Schaltung der Klimaanlage
- 3: zweite Bedienungs- (Dreh-) Handhabe für Luftdurchsatz und Frischluft-/Umluftschaltung
- 4: Befestigungspunkte
- 5: Anzeigefeld Klimaanlage "Ein"
- 6: Farbmarkierung "Kalt" (blau)
- 7: Farbmarkierung "Warm" (rot)
- 8: Markierungen Luftverteilung
- 9: Markierung Defrost
- 10: Markierung Luftdurchsatzmenge = Lüfterdrehzahl
- 11: Markierung Frischluft
- 12: Markierung Umluft

## Patentansprüche

1. Bedientafel (1) für eine Kraftfahrzeug-Heizungs- oder Klimaanlage mit Bedienungshandhaben (2, 3) zum Einstellen der Solltemperatur, der Luftverteilung und des Luftdurchsatzes, **dadurch gekennzeichnet, dass** eine erste gemeinsame Bedienungshandhabe (2) für das Einstellen der Solltemperatur und der Luftverteilung vorgesehen ist, wobei eine eingestellte Solltemperatur einer vorgegebenen Luftverteilung entspricht und wobei eine eingestellte Luftverteilung einer vorgegebenen Solltemperatur entspricht, wodurch die Luftverteilung so an die eingestellte Solltemperatur gekoppelt ist, dass eine Änderung der Solltemperatur einer Änderung der Luftverteilung entspricht, und dass eine zweite Bedienungshandhabe (3) für das Einstellen des Luftdurchsatzes vorgesehen ist.

2. Bedientafel nach Anspruch 1, **dadurch gekennzeichnet, daß** bei eingestellter mittlerer Solltemperatur die Fußraumausströmer geöffnet sind.

3. Bedientafel nach Anspruch 1, **dadurch gekennzeichnet, daß** bei eingestellter höchster Solltemperatur die Defrostausströmer geöffnet sind.

4. Bedientafel nach Anspruch 1, **dadurch gekennzeichnet, daß** bei eingestellter niedrigster Solltemperatur die Defrostausströmer geöffnet sind.

5. Bedientafel nach Anspruch 1, **dadurch gekennzeichnet, daß** bei eingestellter niedrigster oder niedriger Solltemperatur die Schalttafelausströmer geöffnet sind.

6. Bedientafel nach Anspruch 1, **dadurch gekennzeichnet, daß** bei eingestellter hoher Solltemperatur die Fußraumausströmer und die Defrostausströmer geöffnet sind.

7. Bedientafel nach Anspruch 1, **dadurch gekennzeichnet, daß** bei eingestellter niedriger Solltemperatur die Fußraumausströmer und die Schalttafelausströmer geöffnet sind.

8. Bedientafel nach Anspruch 1, **dadurch gekennzeichnet, daß** eine Bedienungshandhabe für die Schaltung eines Kühlaggregates vorgesehen ist, die mit der gemeinsamen Bedienungshandhabe (2) für die Solltemperatur und die Luftverteilung zusammengefaßt ist.

9. Bedientafel nach Anspruch 1, **dadurch gekennzeichnet, daß** die gemeinsame Bedienungshandhabe (2) eine Drehhandhabe ist.

10. Bedientafel nach Anspruch 8 und Anspruch 9, **dadurch gekennzeichnet, daß** die gemeinsame Bedienungshandhabe (2) eine Drehschiebehandhabe ist.

11. Bedientafel nach Anspruch 1, **dadurch gekennzeichnet, daß** eine Bedienungshandhabe für die Frischluft-/Umluftschaltung vorgesehen ist, die mit der Bedienungshandhabe für den Luftdurchsatz zu einer zweiten gemeinsamen Bedienungshandhabe (3) zusammengefaßt ist.

12. Bedientafel nach Anspruch 11, **dadurch gekennzeichnet, daß** die Frischluft-/Umluftumschaltung in einer Mittelstellung der zweiten gemeinsamen Bedienungshandhabe (3) erfolgt, wobei, ausgehend von dieser Mittelstellung, der Luftdurchsatz stufenweise oder kontinuierlich erhöht wird.

13. Bedientafel nach Anspruch 11, **dadurch gekennzeichnet, daß** die zweite gemeinsame Bedienungshandhabe (3) eine Drehhandhabe ist.

## Claims

1. Operating unit (1) for a heat or air conditioning device of a vehicle with operating controls (2, 3) to set the desired temperature, the air distribution and the rate of air flow, **characterised by** the fact that a first general operating control (2) for setting the desired temperature and air distribution is provided, in which a set desired temperature corresponds to a preset air distribution and in which a set air distribution corresponds to a preset desired temperature, in which the air distribution is linked to the set desired temperature so that a change in the desired temperature corresponds to a change in the air distribution, and a second operating control (3) is provided for setting the rate of air flow.

2. Operating unit according to claim 1, **characterised by** the fact that the outlet in the foot area is opened at a set medium desired temperature.

3. Operating unit according to claim 1, **characterised by** the fact that the defrost outlet is opened at the set maximum desired temperature.

4. Operating unit according to claim 1, **characterised by** the fact that the defrost outlet is opened at the set minimum desired temperature.

5. Operating unit according to claim 1, **characterised by** the fact that the control panel outlet is opened at the set minimum or a low desired temperature.

6. Operating unit according to claim 1, **characterised by** the fact that the outlet in the foot area and the defrost outlet are opened at a set high desired temperature.

7. Operating unit according to claim 1, **characterised by** the fact that the outlet in the foot area and control panel outlet are opened at a set low desired temperature.

8. Operating unit according to claim 1, **characterised by** the fact that an operating control is provided for controlling a cooling unit, which is combined with the general operating control (2) for the desired temperature and air distribution.

9. Operating unit according to claim 1, **characterised by** the fact that the general operating control (2) is a rotating control.

10. Operating unit according to claim 8 and claim 9, **characterised by** the fact that the general operating control (2) is a rotating sliding control.

11. Operating unit according to claim 1, **characterised by** the fact that an operating control is provided for controlling the fresh air/circulating air, which is combined with an operating control for the rate of air flow to a second general operating control (3).

12. Operating unit according to claim 11, **characterised by** the fact that the fresh air/circulating air control is in a mid-position of the second general operating control (3) in which the rate of air flow is increased in stages or continuously from this mid-position.

13. Operating unit according to claim 11, **characterised by** the fact that the second general operating control (3) is a rotating control.

## Revendications

1. Tableau de commande (1) pour un système de chauffage ou de climatisation d'un véhicule automobile, comportant des manettes (2, 3) pour le réglage de la température de consigne, pour la répartition d'air et pour le débit d'air, **caractérisé en ce qu'**il est prévu une première manette (2) commune pour le réglage de la température de consigne et de la répartition d'air, de manière qu'une température de consigne réglée corresponde à une répartition d'air prédéterminée et qu'une répartition d'air réglée corresponde à une température de consigne prédéterminée, grâce à quoi la répartition d'air est couplée à la température de consigne réglée de telle sorte qu'une modification de la température de consigne corresponde à une modification de la répartition d'air, et **en ce qu'**il est prévu une deuxième manette (3) pour le réglage du débit d'air.

2. Tableau de commande selon la revendication 1, **caractérisé en ce que** lorsqu'une température de consigne moyenne est réglée, les diffuseurs d'air de plancher sont ouverts.

3. Tableau de commande selon la revendication 1, **caractérisé en ce que** lorsqu'une température de consigne maximum est réglée, les diffuseurs de dégivrage sont ouverts.

4. Tableau de commande selon la revendication 1, **caractérisé en ce que** lorsqu'une température de consigne minimum est réglée, les diffuseurs de dégivrage sont ouverts.

5. Tableau de commande selon la revendication 1, **caractérisé en ce que** lorsqu'une température de consigne minimum ou faible est réglée, les diffuseurs de tableau de bord sont ouverts.

6. Tableau de commande selon la revendication 1, **caractérisé en ce que** lorsqu'une haute température de consigne est réglée, les diffuseurs de plancher et les diffuseurs de dégivrage sont ouverts.

7. Tableau de commande selon la revendication 1, **caractérisé en ce que** lorsqu'une faible température de consigne est réglée, les diffuseurs de plancher et les diffuseurs de tableau de bord sont ouverts.

8. Tableau de commande selon la revendication 1, **caractérisé en ce que** pour la commutation d'un groupe frigorifique est prévue une manette qui est réunie à la manette (2) commune pour la température de consigne et pour la répartition d'air.

9. Tableau de commande selon la revendication 1, **caractérisé en ce que** la manette (2) commune est une manette rotative.

10. Tableau de commande selon les revendications 8 et 9, **caractérisé en ce que** la manette (2) commune est une manette-poussoir rotative.

11. Tableau de commande selon la revendication 1, **caractérisé en ce que** pour la commutation air frais/air recyclé est prévue une manette qui est réunie avec la manette pour le débit d'air pour former une deuxième manette (3) commune.

12. Tableau de commande selon la revendication 11, **caractérisé en ce que** la commutation air frais/air recyclé a lieu dans une position médiane de la deuxième manette (3) commune, et partant de cette position médiane, le débit est augmenté par gradins ou de manière continue.

13. Tableau de commande selon la revendication 11, **caractérisé en ce que** la deuxième manette (3) commune est une manette rotative.
